# EUROPEAN PATENT APPLICATION

(11) **EP 4 032 959 A1**
(43) Date of publication of application: **27.07.2022**
(21) Application number: 20864374.2
(22) Date of filing: 16.07.2020
(51) Int. Cl.: C09D 11/38, B41M 5/00

(54) **DISPERSION, INK COMPOSITION, AND PRINTED ARTICLE**

(30) Priority: 19.09.2019 JP 2019170894
(71) Applicant: DNP Fine Chemicals Co., Ltd., Yokohama-shi, Kanagawa 226-0022 (JP); Dai Nippon Printing Co., Ltd., Tokyo 162-8001 (JP)
(72) Inventor: BIN Shin, Tokyo 162-8001 (JP); MASUYAMA Yuko, Tokyo 162-8001 (JP); SATO Jun, Tokyo 162-8001 (JP); OKADA Masato, Tokyo 162-8001 (JP); MURAKAMI Fumiyasu, Tokyo 162-8001 (JP); YAMAZAKI Fumie, Yokohama-shi, Kanagawa 226-0022 (JP); FUJIOKA Yuuko, Yokohama-shi, Kanagawa 226-0022 (JP)
(74) Representative: Winter, Brandl - Partnerschaft mbB
(86) International application number: PCT/JP2020/027732
(87) International publication number: WO 2021/053953

(57) **Abstract**

Provided is a dispersion that, even when used in an ink composition for ejection via an inkjet method, prevents the loss of phosphor luminescence and enables the manufacture of an ink composition with high ejection stability. The dispersion is used in an ink composition for ejection via an inkjet method, and a fluorescent complex containing a rare earth metal element is dispersed in the dispersion. The median diameter D50 of the fluorescent complex is preferably 5 µm or less.

## Description

### TECHNICAL FIELD

The present invention relates to a dispersion liquid, an ink composition, and printed matter.

### BACKGROUND ART

There has been known printed matter on which an information pattern composed of a number, a letter, a figure, a symbol, a picture, etc. is printed and which requires security such as a chance lottery, a gift certificate, a pass, a ticket, and other marketable securities.

Since damage caused by theft and fraudulent copying using a copying machine (copier) of such printed matter has become a social problem, there is an urgent need to develop an anti-counterfeiting technology that enables advanced authentication.

For example, Patent Documents 1 to 5 describe technologies related to ink compositions in which fluorescent dyes are dissolved. However, since these ink compositions are prepared by dissolving the fluorescent dyes, the ink compositions have a problem in that the dyes in a dissolved state have poor light resistance, heat resistance, chemical resistance, etc.

Furthermore, Patent Documents 6 to 8 describe technologies for ink compositions including resins colored with fluorescent dyes. However, since these ink compositions use dyes (fluorescent dyes) as fluorescent substances, the ink compositions have a problem of very poor light resistance and chemical resistance.
Patent Document 1: Japanese Unexamined Patent Application, Publication No. 2003-261804
Patent Document 2: Japanese Unexamined Patent Application, Publication No. 2008-303196
Patent Document 3: Japanese Unexamined Patent Application, Publication No. 2010-215686
Patent Document 4: Japanese Unexamined Patent Application, Publication No. 2019-056111
Patent Document 5: Japanese Unexamined Patent Application, Publication No. 2018-095750
Patent Document 6: Japanese Unexamined Patent Application, Publication No. 2013-241565
Patent Document 7: Japanese Unexamined Patent Application, Publication No. 2014-047227
Patent Document 8: Japanese Unexamined Patent Application, Publication No. 2016-035047

### DISCLOSURE OF THE INVENTION

### Problems to be Solved by the Invention

Meanwhile, an inkjet method is a printing method that does not require a plate and can be applied to digital printing, thus allowing a printing pattern to be changed freely. Such an inkjet method is particularly useful for an ink composition for producing printed matter that requires security since the printing pattern can be freely changed.

However, since the ink composition is discharged from an inkjet nozzle in the inkjet method, the ink composition is required to have discharge stability. For the above-mentioned ink composition in which the fluorescent dye is dissolved , the fluorescent dye dissolved in the ink composition may decompose to cause loss of luminescent ability, or a component included in the ink composition may precipitate to deteriorate the discharge stability.

Moreover, when the fluorescent substance includes a metal element, changes in a physical or chemical environment around the metal element may cause loss of luminescence. The present inventors have revealed that a luminescence mechanism of the fluorescent substance dissolved in a solvent (water or an organic solvent) may not work due to changes in a physical or chemical environment, potentially causing its luminescence to be lost.

An object of the present invention is to provide a dispersion liquid which prevents a fluorescent substance from losing a luminescent ability and from which an ink composition having high discharge stability can be produced even when the dispersion liquid is used for an ink composition to be discharged in an inkjet method.

### Means for Solving the Problems

As a result of extensive studies to solve the above problems, the present invention has been completed based on findings that a dispersion liquid in which a fluorescent complex including a rare earth metal element is dispersed can solve the above problems. Specifically, the present invention provides the following.

A first aspect of the present invention relates to a dispersion liquid for use in an ink composition to be discharged in an inkjet method, the dispersion liquid including:
a fluorescent complex including a rare earth metal element, the fluorescent complex being dispersed in the dispersion liquid.

A second aspect of the present invention relates to the dispersion liquid as described in the first aspect, in which the fluorescent complex has a median diameter D50 of 5 µm or less.

A third aspect of the present invention relates to the dispersion liquid as described in the first or second aspect, in which the rare earth metal element includes at least one selected from the group consisting of Eu³⁺, Eu²⁺, Tb³⁺, Sm³⁺, Yb³⁺, Nd³⁺, Er³⁺, Pr³⁺, Tm³⁺, Dy³⁺, Ce³⁺, Ho³⁺, and Gd³⁺.

A fourth aspect of the present invention relates to the dispersion liquid as described in any one of the first to third aspects, further including an active energy ray polymerizable compound.

A fifth aspect of the present invention relates to the dispersing liquid as described in any one of the first to fourth aspects, further including an organic solvent.

A sixth aspect of the present invention relates to an ink composition for discharge in an inkjet method, the composition including:
a fluorescent complex including a rare earth metal element, the fluorescent complex being dispersed in the ink composition.

A seventh aspect of the present invention relates to printed matter, including:
a substrate; and
a printed layer formed with the ink composition according to the sixth aspect on a surface of the substrate.

An eighth aspect of the present invention relates to the printed matter as described in the seventh aspect, in which the substrate is an absorbent substrate and in which at least a portion of the ink composition is absorbed on the absorbent substrate.

A ninth aspect of the present invention relates to the printed matter as described in the seventh or eighth aspect, in which the substrate includes no brightening agent.

A tenth aspect of the present invention relates to the printed matter as described in the seventh or eighth aspect, in which the substrate includes a brightening agent and in which a fluorescent complex that does not emit blue light is dispersed in the ink composition.

An eleventh aspect of the present invention relates to the printed matter as described in any one of the seventh to tenth aspects, in which an overcoat layer is disposed on a surface of the printed layer and has a total light transmittance of 50% or more as measured according to JIS K 7361-1.

A twelfth aspect of the present invention relates to the printed matter as described in any one of the seventh to eleventh aspects, in which the substrate has a color identical to that of an information pattern of the printed layer.

### Effects of the Invention

The present invention can provide a dispersion liquid which prevents a fluorescent substance from losing a luminescent ability and from which an ink composition having high discharge stability can be produced even when the dispersion liquid is used for an ink composition to be discharged in an inkjet method.

### BRIEF DESCRIPTION OF THE DRAWINGS

FIG. 1 is a plan view showing one exemplary printed matter according to the present embodiment; and
FIG. 2 is a cross-sectional view of the printed matter taken along line X-X of FIG. 1.

### PREFERRED MODE FOR CARRYING OUT THE INVENTION

Although specific embodiments of the present invention will be described hereafter in detail, the present invention is not limited to the embodiments below in any way and can be implemented with modifications as appropriate within the scope of the object of the present invention.

### <Dispersion liquid>

A dispersion liquid according to the present embodiment is a dispersion liquid in which a fluorescent complex including a rare earth metal element is dispersed therein. Thus, dispersion of the fluorescent complex in the dispersion liquid can prevent a fluorescent substance (fluorescent complex) from losing luminescent ability and allows an ink composition having high discharge stability to be produced.

The term dispersion refers to a state in which a substance is dispersed in a dispersion liquid, unlike the term solution which refers to a state in which a solute is uniformly mixed in a solvent. Specifically, the dispersion refers to a state in which the fluorescent complex has a median diameter D50 equal to or larger than a predetermined value, for example, 0.01 µm or more.

A dispersion medium into which the fluorescent complex is to be dispersed is not particularly limited. For example, the fluorescent complex may be dispersed in an active energy ray polymerizable compound which is polymerized and cured by being irradiated with an active energy ray. Furthermore, the dispersion medium may be an organic solvent to be used for a solvent-based ink composition. The active energy ray polymerizable compound and the organic solvent will be described below.

The fluorescent complex to be included in the dispersion liquid according to the present embodiment will be described. Note that, this fluorescent complex may be dispersed in any dispersion medium of the active energy ray polymerizable compound and/or the organic solvent.

### [Fluorescent complex]

The fluorescent complex includes a rare earth metal element. This fluorescent complex produces luminescence by emitting, as light, energy corresponding to an energy band gap when reaching an energy-excited state by absorbing light. Usually, the luminescence can be identified by human eyes using, as an excitation source, a simple light source such as a black light (light using a light source radiating a UV ray).

A ligand to be coordinated to a rare earth ion preferably includes at least one organic ligand selected from a phosphine oxide compound, an oxygen-containing aromatic heterocyclic compound, a nitrogen-containing aromatic heterocyclic compound, a sulfur-containing aromatic heterocyclic compound, a diketo compound, and a halogenated diketo compound.

Examples of the phosphine oxide compound include those containing a phosphine oxide ligand represented by General Formula (1) below. 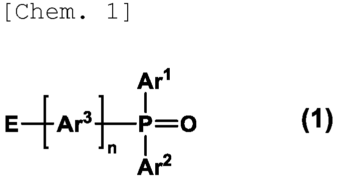 In General Formula (1), Ar¹ and Ar² are each independently an optionally substituted monovalent aromatic group. In General Formula (1), Ar³ is a divalent group represented by General Formulas (2a), (2b), or (2c) below; and n is 1 or 2.

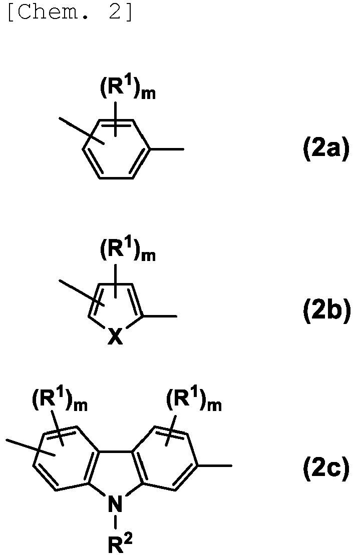

In the General Formulas (2a) to (2c), R¹ are each independently a monovalent substituent; X is a sulfur atom or an oxygen atom; R² is a hydrogen atom or a hydrocarbon group; m is an integer from zero to the number of a substitutable site in a ring to which R¹ binds. When m is 2 or more, R¹ may be the same as or different from each other.

In Formula (1), E is a hydrogen atom or a phosphine oxide group represented by Formula (3) below.

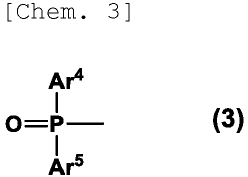

In General Formula (3), Ar⁴ and Ar⁵ are each independently an optionally substituted monovalent aromatic group.

Examples of the oxygen-containing aromatic heterocyclic compound include compounds such as oxole, pyran, 2-pyrone, 4-pyrone, chromene, isochromene, xanthene, oxepin, etc.

Examples of the nitrogen-containing aromatic heterocyclic compound include pyrrole, pyridine, 2-methylpyridine, 2,4,6-trimethylpyridine, 4-dimethylaminopyridine, 2,6-lutidine, pyrimidine, pyridazine, pyrazine, oxazole, imidazole, isoxazole, thiazole, isothiazole, imidazole, 1,2-dimethylimidazole, 3-(dimethylamino)propylimidazole, pyrazole, furazan, pyrazine, quinoline, isoquinoline, purine, 1H-indazole, quinazoline, cinnoline, quinoxaline, phthalazine, pteridine, phenanthridine, 2,6-di-t-butylpyridine, 2,2'-bipyridine, 4,4'-dimethyl-2,2'-bipyridil, 4'-dimethyl-2,2'-bipyridyl, 4,4 '-dimethyl-2,2'-bipyridyl, 5,5'-dimethyl-2,2'-bipyridyl, 6,6'-t-butyl-2,2'-dipyridyl, 4,4'-diphenyl-2,2'-bipyridyl, 1,10-phenanthroline, 2,7-dimethyl-1,10-phenanthroline, 5,6-dimethyl-1,10-phenanthroline, 4,7-diphenyl-1,10-phenanthroline, carbazole, benzo-C-cinnoline, triazole, tetrazole, benzoimidazole, benzotriazole, etc.

Examples of the sulfur-containing aromatic heterocyclic compound includes compounds containing tris[1,1,1,5,5,5-hexafluoro-2,4-butanedione4,4,4,-trifluoro-1-(2-thienyl)-1,3-butanedione], tris[4,4,4,-trifluoro-1-(2-thienyl)-1,3-butanedione], benzothiophene, thiophene, thiepin, thiapyran, thiazole, thiazine, etc.

Examples of the diketo compound include α-, β-, and γ-diketone compounds (may also be referred to as dicarbonyl compounds) such as acetylacetone, trifluoroacetylacetone, hexafluoroacetylacetone, benzoylacetone, and benzoyltrifluoroacetone.

The rare earth metal element to be included in a rare earth complex is preferably one capable of forming a complex with the above-mentioned ligand. Among them, at least one rare earth ion selected from the group consisting of Eu³⁺, Eu²⁺, Tb³⁺, Sm³⁺, Yb³⁺, Nd³⁺, Er³⁺, Pr³⁺, Tm³⁺, Dy³⁺, Ce³⁺, Ho³⁺, and Gd³⁺ is more preferably included.

Specific examples of the complex include (M(CH₃COCHCOCH₃)₃(H₂O)ₙ, M(hfa)₃(H₂O)ₙ, M(hfa)₃(TPPO)₂, M(btfa)₃(H₂O)M(btfa)₃(TPPO)₂, [M(hfa)₃(dpbp)]ₙ, etc. (M = at least one rare earth metal element ion selected from the group consisting of Eu, Tb, Sm, Yb, Nd, Er, Pr, Tm, Dy, Ce, Ho, and Gd, hfa = hexafluoroacetylacetone, TPPO = triphenylphosphine oxide, btfa = benzoyltrifluoroacetone, dpbp = biphenyl-4,4'-diylbis(diphenylphosphine oxide)). Preferred examples of a complex constituting the fluorescent complex include a mononuclear complex and a polynuclear complex (may also be referred to as complex polymer or polymer complex). In the case of the complex polymer, different metals and ligands may be arbitrarily combined in a repeated unit of the polymer.

The rare earth complex has preferably a particle diameter (median diameter D50) of 5 µm or less. This can reduce the possibility of the rare earth complex settling and improve the discharge stability of the ink composition. The rare earth complex becomes well dispersible through an interaction with a dispersing agent or a dispersing medium due to the presence of the ligand. It is believed that this is why the possibility of sedimentation can be reduced. Therefore, for the dispersion liquid according to the present embodiment, a wide variety of dispersion media may be selected. Note that, the rare earth complex has more preferably a particle diameter (median diameter D50) of 3 µm or less and further preferably 1 µm or less. The rare earth complex has preferably a median diameter D50 of 0.01 µm or more and more preferably 0.1 µm or more. Note that, the rare earth complex can be measured for the particle diameter (median diameter D50) using, for example, "MICROTRAC" (MicrotracBEL Corp.), "FPAR" (Otsuka Electronics Co., Ltd.), or "Partica" (HORIBA, Ltd.), etc.

An amount of the fluorescent complex included in the dispersion liquid is not particularly limited as long as the fluorescent complex can be dispersed in the dispersion liquid. For example, the amount is preferably 1.0% by mass or more, more preferably 10.0% by mass or more, and most preferably 15.0% by mass or more in the total amount of the dispersion liquid. An amount of the dispersing agent is preferably 40.0% by mass or less, more preferably 35.0% by mass or less, and most preferably 30.0% by mass or less in the total amount of the dispersion liquid.

### [Dispersing agent]

Examples of the dispersing agent include "HINOACT" (Kawaken Fine Chemicals Co., Ltd.), "DISPERBYK", "BYK", and "BYKJET" (BYK-Chemie GmbH.), "DISPARLON" (Kusumoto Chemicals, Ltd.), "SOLSPERSE" and "SOLPLUS" (Lubrizol Corporation), "Dispex" and "EFKA" (BASF SE), "AJISPER" (Ajinomoto Fine-Techno Co., Inc.), etc. Among them, a dispersing agent containing a basic group is preferred. This has a high affinity with a particle surface of the fluorescent complex including the rare earth metal element and a high dispersing effect, which enables easier control of a particle diameter of the fluorescent complex. Furthermore, since the particle surface of the fluorescent complex including the rare earth metal element is Lewis acidic, a compound capable of serving as a Lewis base may also be used as the dispersing agent besides an amine-based compound commonly used as a basic group in the above-mentioned dispersing agent. For example, a carbonyl group, a carboxylate group, an aromatic compound, and a silicon compound are preferred since they can serve as a Lewis base and enable easier control of a particle diameter of the fluorescent complex.

The dispersing agent may not be included in the dispersion liquid, that is, an amount of the dispersing agent included in the dispersion liquid may be 0% by mass as long as the fluorescent complex can be dispersed in the dispersion liquid. The amount of the dispersing agent, if present, is not particularly limited as long as the fluorescent complex can be dispersed in the dispersion liquid. For example, the amount is preferably 1.0% by mass or more and more preferably 3.0% by mass or more in the total amount of the dispersion liquid. The amount of the dispersing agent is preferably 20.0% by mass or less and more preferably 15.0% by mass or less in the total amount of the dispersion liquid.

### <<Dispersion liquid including active energy ray polymerizable compound>>

This dispersion liquid includes an active energy ray polymerizable compound. The active energy ray polymerizable compound refers to a compound having an ethylenically unsaturated double bond that is polymerized by being irradiated with an active energy ray such as an electron ray, a proton ray, and a neutron ray, as well as an electromagnetic wave such as a far ultraviolet ray, an ultraviolet ray, a near-ultraviolet ray, a visible ray, an infrared ray, an X-ray, and a γ-ray.

### [Active energy ray polymerizable compound]

As the active energy ray polymerizable compound, a radical-polymerizable compound, a cation-polymerizable compound, an unsaturated group-containing compound, etc. may be used without restriction. The unsaturated group-containing compound is preferably used as the active energy ray polymerizable compound. Examples of the unsaturated group-containing compound include a monofunctional polymerizable compound having one ethylenically unsaturated double bond and/or a polyfunctional polymerizable compound having two or more ethylenically unsaturated double bonds.

Examples of the active energy ray polymerizable compound include a (meth)acrylic acid-based compound; a maleic acid-based compound; a compound having an ethylenically unsaturated double bond modified with a urethane-, epoxy-, polyester-, polyol-, or plant oil-based compound, etc. From the viewpoint of the discharge stability, a (meth)acrylic acid group-containing compound ((meth)acrylate) is preferably included. Note that, as used herein, the term "(meth)acrylate" means both acrylate and methacrylate.

Examples of monofunctional (meth)acrylate include phenoxyethyl (meth)acrylate, 3,3,5-trimethylcyclohexyl (meth)acrylate, methyl (meth)acrylate, ethyl (meth)acrylate, n-propyl (meth)acrylate, isopropyl (meth)acrylate, n-butyl (meth)acrylate, sec-butyl (meth)acrylate, isobutyl (meth)acrylate, tert-butyl (meth)acrylate, n-pentyl (meth)acrylate, n-hexyl (meth)acrylate, 2-ethyl hexyl (meth)acrylate, n-octyl (meth)acrylate, isodecyl (meth)acrylate, (2-methyl-2-ethyl-1,3-dioxolan-4-yl)methyl acrylate, tetrahydrofurfuryl (meth)acrylate, n-decyl (meth)acrylate, benzyl (meth)acrylate, phenyl (meth)acrylate, cyclohexyl (meth)acrylate, tert-butylcyclohexyl (meth)acrylate, norbornyl (meth)acrylate, dicyclopentenyl (meth)acrylate, isobornyl (meth)acrylate, dicyclopentanyl (meth)acrylate, 1-adamantyl (meth)acrylate, allyl (meth)acrylate, 2,2'-oxybis(methylene)bis-2-propenoate, ethylcarbitol (meth)acrylate, glycidyl (meth)acrylate, 2-hydroxylethyl (meth)acrylate, 2-hydroxypropyl (meth)acrylate, 4-hydroxybutyl (meth)acrylate, t-butyl (meth)acrylate, isononyl (meth)acrylate, nonyl (meth)acrylate, methoxyethyl (meth)acrylate, cyclic trimethylolpropane formal (meth)acrylate, 2-dimethylaminoethyl (meth)acrylate, acryloylmorpholine, N-acryloyloxyethyl hexahydrophthalimide, stearyl (meth)acrylate, isostearyl (meth)acrylate, tridecyl (meth)acrylate, 2,2,2-trifluoroethyl (meth)acrylate, 2,2,3,3-tetrafluoropropyl (meth)acrylate, 1H,1H,5H-octafluoropentyl (meth)acrylate, 1H,1H,2H,2H-tridecafluorooctyl (meth)acrylate, etc.

Examples of difunctional (meth)acrylate include 1,6-hexyl di(meth)acrylate, ethylene glycol di(meth)acrylate, diethylene glycol di(meth)acrylate, dipropylene glycol di(meth)acrylate, tripropylene glycol di(meth)acrylate, hexanediol di(meth)acrylate, long chain aliphatic di(meth)acrylate, 1,4-butanediol di(meth)acrylate, 1,6-hexanediol di(meth)acrylate, 1,9-nonanediol di(meth)acrylate, neopentyl glycol di(meth)acrylate, hydroxy pivalic acid neopentyl glycol di(meth)acrylate, stearic acid-modified pentaerythritol di(meth)acrylate, propylene glycol di(meth)acrylate, glycerol di(meth)acrylate, triethylene glycol di(meth)acrylate, tetraethylene glycol di(meth)acrylate, tetramethylene glycol di(meth)acrylate, butylene glycol di(meth)acrylate, propoxylated neopentyl glycol di(meth)acrylate, dicyclopentanyl di(meth)acrylate, polyethylene glycol di(meth)acrylate, polypropylene di(meth)acrylate, triglycerol di(meth)acrylate, neopentyl glycol-modified trimethylolpropane di(meth)acrylate, allylated cyclohexyl di(meth)acrylate, methoxylated cyclohexyl di(meth)acrylate, acrylated isocyanurate, bis(acryloxy neopentyl glycol)adipate, bisphenol A di(meth)acrylate, tetrabromobisphenol A di(meth)acrylate, bisphenol S di(meth)acrylate, butanediol di(meth)acrylate, phthalic acid di(meth)acrylate, phosphoric acid di(meth)acrylate, zinc di(meth)acrylate, etc.

The amount of the active energy ray polymerizable compound included in the dispersion liquid is not particularly limited as long as the fluorescent complex can be dispersed in the dispersion liquid. For example, the amount is preferably 50.0% by mass or more and more preferably 55.0% by mass or more in the total amount of the dispersion liquid. The amount of the active energy ray polymerizable compound is preferably 95.0% by mass or less and more preferably 90.0% by mass or less in the total amount of the dispersion liquid.

### [Other components]

Other components may be further included in the dispersion liquid according to the present embodiment as necessary unless they impair the effect of the present disclosure. Examples of the other components include a polymerization inhibitor, an antioxidant, a solvent, a pigment, a surfactant, etc. Note that, the solvent may be the below-mentioned organic solvent.

### <<Dispersion liquid including organic solvent>>

### [Organic solvent]

The organic solvent is one with which the fluorescent complex may be dispersed in the dispersion liquid. Any organic solvent may be used unless the organic solvent facilitates dissolution, decomposition, or ligand exchange of the fluorescent complex. Such an organic solvent may be used as long as it has a molecular weight of 50 or more or a boiling point of 60°C or more. The organic solvent is less likely to cause loss of fluorescent emission due to dissolution, decomposition, or ligand exchange of the complex and makes it easier to achieve performance required as an inkjet ink composition.

Examples of the organic solvent include alkyl alcohols having 3 to 5 carbon atoms such as n-propyl alcohol, isopropyl alcohol, n-butyl alcohol, sec-butyl alcohol, tert-butyl alcohol, isobutyl alcohol, and n-pentanol; monohydric alcohols such as 3-methoxy-3-methyl-1-butanol, 3-methoxy-1-propanol, 1-methoxy-2-propanol, and 3-methoxy-n-butanol; amides such as 1-dimethyl formamide, dimethyl acetamide, 3-methoxypropanamide, 3-butoxypropanamide, N,N-dimethyl-3-methoxypropanamide, N,N-dibutyl-3-methoxypropanamide, N,N-dibutyl-3-butoxypropanamide, and N,N-dimethyl-3-butoxypropanamide; ketones or keto alcohols such as acetone and diacetone alcohol; ethers such as tetrahydrofuran and dioxane; oxyethylene- or oxypropylene-copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol: tetrahydric alcohols such as mesoerythritol and pentaerythritol; monoalkylethers such as ethylene glycol monomethyl (or ethyl, isopropyl, n-butyl, isobutyl, n-hexyl, 2-ethyl hexyl)ether, diethylene glycol monomethyl (or ethyl, isopropyl, n-butyl, isobutyl, n-hexyl, 2-ethyl hexyl)ether, triethylene glycol monomethyl (or ethyl, isopropyl, n-butyl, isobutyl)ether, propylene glycol monomethyl (or ethyl, isopropyl, n-butyl, isobutyl)ether, and dipropylene glycol monomethyl (or ethyl, isopropyl, n-butyl, isobutyl)ether; dialkyl ethers of polyhydric alcohols such as ethyl diglycol acetate, diethylene glycol dimethyl ether, diethylene glycol diethyl ether, diethylene glycol ethyl methyl ether, triethylene glycol dimethyl ether, triethylene glycol diethyl ether, tetraethylene glycol dimethyl ether, tetraethylene glycol diethyl ether, propylene glycol dimethyl ether, propylene glycol diethyl ether, dipropylene glycol dimethyl ether, and dipropylene glycol diethyl ether; alkanolamines such as monoethanolamine, diethanolamine, triethanolamine, N-methyl ethanolamine, N-ethyl ethanolamine, N-butyl ethanolamine, N-methyl diethanolamine, N-ethyl diethanolamine, and N-butyl diethanolamine; nitrogen-containing heterocyclic compounds such as N-methyl-2-pyrrolidone, 2-pyrrolidone, and 1,3-dimethyl-2-imidazolidinone; cyclic compounds such as γ-butyrolactone and sulfolane.

The amount of the organic solvent included in the dispersion liquid is not particularly limited as long as the fluorescent complex including the rare earth metal element can be dispersed in the dispersion liquid. For example, the amount is preferably 50.0% by mass or more and more preferably 60.0% by mass or more in the total amount of the dispersion liquid. Furthermore, the amount of the organic solvent is preferably 95.0% by mass or less and more preferably 90.0% by mass or less in the total amount of the dispersion liquid.

### [Other components]

Other components may be further included in the dispersion liquid according to the present embodiment as necessary unless they impair the effect of the present disclosure. Examples of the other components include an antioxidant, a pigment, a resin, a surfactant, an antifoamer, etc.

### <<Method for producing dispersion liquid>>

The dispersion liquid can be produced by, for example, dispersing components using a paint shaker. Note that, a particle diameter (median diameter D50) of the fluorescent complex can be controlled by dispersing conditions such as dispersing time.

### <<Ink composition>>

For an ink composition according to the present embodiment, the fluorescent complex including the rare earth metal element is dispersed in the ink composition. Thus, dispersion of the fluorescent complex in the ink composition can prevent a fluorescent substance (fluorescent complex) from losing a luminescent ability and can improve the discharge stability of the ink composition. Furthermore, the ink composition to be discharged in the inkjet method according to the present embodiment has an excellent dischargeability and storage stability and further has a good luminescent ability and excellent durability, and therefore, is suitable for printed matter having excellent design and security.

This ink composition can be produced from the dispersion liquid according to the above embodiment. Furthermore, the ink composition according to the present embodiment may be produced by directly dispersing the fluorescent complex including the rare earth metal element and including components without using the dispersion liquid according to the above embodiment.

An amount of the fluorescent complex included in the ink composition is not particularly limited as long as an information pattern from which the luminescence can be identified by human eyes when irradiated with a predetermined UV ray can be formed. For example, the amount is preferably 0.1% by mass or more and more preferably 0.5% by mass or more in the total amount of the ink composition. The amount of the fluorescent complex is preferably 30.0% by mass or less and more preferably 25.0% by mass or less in the total amount of the ink composition.

The dispersing agent may not be included in the ink composition, that is, an amount of the dispersing agent in the ink composition may be 0% by mass as long as the fluorescent complex can be dispersed in the ink composition. The amount of the dispersing agent, if present, is not particularly limited as long as the fluorescent complex can be dispersed in the ink composition. For example, the amount is preferably 0.5% by mass or more and more preferably 1.0% by mass or more in the total amount of the ink composition. The amount of the dispersing agent is preferably 10.0% by mass or less and more preferably 5.0% by mass or less in the total amount of the ink composition.

Furthermore, an active energy curable ink composition can be produced by including a polymerization initiator and a dispersion liquid including the active energy ray polymerizable compound. Furthermore, a solvent-based ink composition may be produced by including a solvent, a resin, and a dispersion liquid including the organic solvent. Moreover, a water-based ink composition may be produced by including water.

The active energy curable ink composition includes a less amount of volatile components, has excellent environment safety, can be cured with an active energy ray to produce printed matter which can be post-processed immediately after printing, and has excellent workability. Furthermore, the active energy curable ink composition has an advantage that it can be printed on a variety of substrates.

The amount of the active energy ray polymerizable compound included in the active energy curable ink composition is not particularly limited as long as the fluorescent complex can be dispersed in the ink composition and an appropriate cured film can be formed. For example, the amount is preferably 50.0% by mass or more and more preferably 55.0% by mass or more in the total amount of the ink composition. The amount of the active energy ray polymerizable compound is preferably 95.0% by mass or less and more preferably 90.0% by mass or less in the total amount of the ink composition. Note that, a predetermined amount of an organic solvent and/or water may be included even in the active energy curable ink composition.

In the case of the ink composition containing the organic solvent, printed matter having excellent smoothness and glossiness can be produced and a device cost is relatively inexpensive. Therefore, the ink composition including the organic solvent has an advantage that an information pattern can be prevented from being manipulated since an ink slightly penetrates a substrate due to its attack property even when the substrate is a non-absorbent substrate such as a resin substrate.

The amount of the organic solvent included in the ink composition containing the organic solvent is not particularly limited as long as the fluorescent complex including the rare earth metal element can be dispersed in the ink composition. For example, the amount is preferably 70.0% by mass or more and more preferably 75.0% by mass or more in the total amount of the ink composition. Furthermore, the amount is preferably 97.0% by mass or less and more preferably 95.0% by mass or less in the total amount of the ink composition.

An application of the ink composition according to the present embodiment is not particularly limited, but the ink composition is particularly preferably used to print security information that may vary from individual to individual such as a personal identification number (ID number) and a headshot since it has high discharge stability during inkjet discharge.

### [Active energy ray polymerization initiator]

The active energy ray polymerization initiator in the active energy curable ink composition is not particularly limited as long as it promotes a polymerization reaction of a compound having an ethylenically unsaturated double bond when irradiated with an active energy ray, and any conventionally known active energy ray polymerization initiator may be used. Specific examples of the active energy ray polymerization initiator include aromatic ketones including thioxanthone; α-aminoalkylphenones, α-hydroxyketones, acylphosphone oxides, aromatic oniums, organic peroxides, thio compounds, hexaarylbiimidazole compounds, ketooxime ester compounds, borate compounds, azinium compounds, metallocene compounds, active ester compounds, compounds having carbon-halogen bonds, and alkylamine compounds.

An amount of the active energy ray polymerization initiator included in the active energy curable ink composition may be any amount as long as a polymerization reaction of the active energy ray polymerizable compound can be appropriately initiated, and is preferably 1.0% by mass or more and more preferably 3.0% by mass or more in the total amount of the ink composition. Furthermore, the amount is preferably 20.0% by mass or less in the total amount of the ink composition. Note that, the active energy ray polymerization initiator is not essential even for the active energy curable ink composition. For example, when an electron ray is used as the active energy ray, the active energy ray polymerization initiator may not be used.

### [Binder resin]

A binder resin can improve fixability and water resistance of the ink composition. The binder resin is not particularly limited. For example, an acrylic resin, a polystyrene resin, a polyester resin, a vinyl chloride resin, a vinyl acetate resin, a vinyl chloride-vinyl acetate copolymer resin, a polyethylene resin, a urethane resin, a rosin-modified resin, a phenolic resin, a terpene resin, a polyamide resin, a vinyl toluene-α-methyl styrene copolymer, an ethylene-vinyl acetate copolymer, cellulose acetate butyrate, a silicone (silicon) resin, an acrylamide resin, an epoxy resin, or a copolymer resin or mixture thereof may be used.

An amount of the binder resin is not particularly limited and is preferably 0.3% by mass or more and more preferably 1.0% by mass or more in the total amount of the ink composition. Furthermore, the amount is preferably 15.0% by mass or less and more preferably 10.0% by mass or less in the total amount of the ink composition. Note that, the binder resin may be included either in the active energy curable ink composition or the ink composition including the organic solvent.

### <<Printed matter>>

Printed matter is a laminate in which a printed layer is formed with an ink composition on a surface of a substrate.

Examples of the printed matter include a marketable security such as a bill, a check, a stock certificate, a bond certificate, various bonds, etc.; a bank note, a gift certificate, a transportation ticket, an admission ticket to a facility and an event, a lottery ticket, a winning betting ticket for publicly-managed gambling sport, a stamp, a card such as a credit card; an IC card, Individual Number Card, a passport, an identification card, various commercial printed matter, a poster, etc.

Herein, the ink composition according to the present embodiment is characterized by being discharged in an inkjet method. Personal information such as an identification number (ID number) and a headshot may vary from individual to individual, and therefore, is preferably printed in the inkjet method in which a printing pattern is to be changed freely.

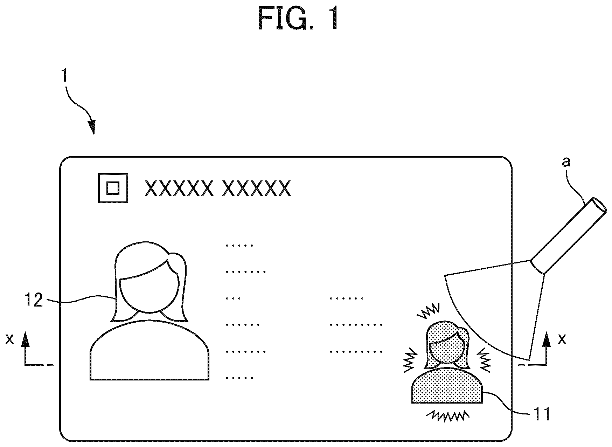

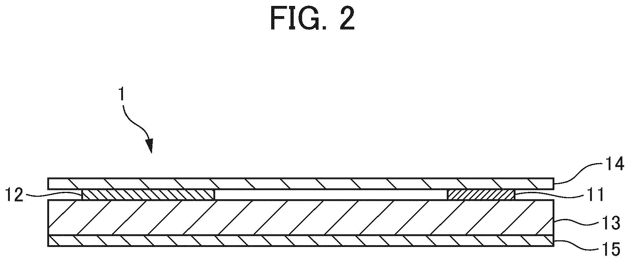

On exemplary printed matter is shown in FIGs. 1 and 2. A printed matter 1 in FIG. 1 is an identification card and an information pattern 12, that is so-called personal information, such as a personal identification number (ID number) and a headshot is printed thereon with a conventional ink composition. On the printed matter 1, an information pattern 11 similar to the information pattern 12 is printed with the ink composition according to the present embodiment. The information pattern 11 is invisible in an environment under normal visible light, but becomes visible when a surface of the printed matter 1 is irradiated with light emitted from a black light a. Authentication can be performed by comparing the information pattern 11 printed with the ink composition according to the present embodiment to the information pattern 12. Furthermore, the information pattern 12 is not limited to the personal information and may be a printed pattern.

FIG. 2 is a cross-sectional view taken along line X-X of FIG. 1. A printed layer 11 printed with the ink composition according to the present embodiment in which a fluorescent complex is dispersed is formed (printed) on a portion of a surface of a substrate 13 along with a printed layer 12. Both surfaces of the substrate 13 are sandwiched between overcoat layers 14 and 15. Note that, the overcoat layer refers to a layer for protecting a surface of printed matter and that is formed by being coated with, for example, a conventionally known overcoat agent.

In the printed matter according to the present embodiment, the overcoat layer is not necessarily disposed, but especially when the overcoat layer 14 is formed on a side of the printed matter on which the printed layers 11 and 12 are laminated, the printed layer (information pattern) can be protected from becoming scratched and the information pattern on the printed layer can be prevented from being manipulated. Note that, from the viewpoint of improving visibility of the information patterns 11 and 12, the overcoat layer can preferably transmit light, and, in this case, the overcoat layer preferably has a total light transmittance of 50% or more as measured according to JIS K 7361-1.

Furthermore, in a preferred embodiment, a color of the substrate 13 and/or a color of the information pattern 12 is identical to that of the information pattern 11. This makes it difficult to visibly discriminate under normal visible light the information pattern 11 printed with the ink composition according to the present embodiment, allowing the printed matter to have higher security. Note that, when a printed layer other than the information pattern 12 is previously printed on a side of the substrate 13 on which the information pattern is to be printed, a color of the printed layer other than the information pattern 12 and/or the information pattern 12 is preferably identical to that of the information pattern 11.

The information pattern 12 or the printed layer other than the information pattern 12 may be discharged (printed) in the inkjet method with a conventional ink composition, but the printed layer may be printed by offset printing, gravure printing, or flexographic printing, or may be formed in a form of a laser color developing layer which is printed by a laser with laser beam irradiation.

The information pattern 11 in the printed matter 1 in FIGs. 1 and 2 is printed so that it does not overlap with the information pattern 12, but an information pattern printed with the ink composition according to the present embodiment may partially or entirely overlap with an information pattern printed with a conventional ink composition in a plan view of the substrate. This allows the information pattern printed with the ink composition according to the present embodiment to be printed on a larger printing area and allows a larger area to produce luminescence by irradiating a surface of the printed matter with light.

Note that, the printed matter according to the present embodiment may include a layer such as other substrate layers, an adhesive layer, a primer layer, a UV absorbing layer, etc., as necessary.

### [Substrate]

Examples of the substrate include paper such as bond paper, art paper, coated paper, cast-coated paper, synthetic resin or emulsion impregnated paper, synthetic rubber latex impregnated paper, synthetic rubber-containing paper, and cellulose fiber paper; a plastic sheet formed of various synthetic resins such as polyolefin (e.g., polyethylene, polypropylene, etc.), polystyrene, polycarbonate, polyethylene terephthalate, polyvinyl chloride, and polymethacrylate; an opaque film which is formed by adding a pigment or a filler to these synthetic resins; or a film having microvoids within the substrate (so-called synthetic paper). The substrate may not be necessary in a form of film or sheet and may also be a three-dimensional resin compact.

Furthermore, the substrate preferably includes no brightening agent so that the ink composition becomes more clearly visible when irradiated with a black light. In the case of using a substrate including the brightening agent, an ink composition in which a fluorescent complex emitting no blue light is dispersed is preferably used.

Moreover, an absorbent substrate is preferably used in order to enhance security by printing with the ink composition. It is advantageous that an information pattern can be prevented from being manipulated since the ink composition is absorbed in the substrate. The absorbent substrate refers to, for example, a substrate having voids within a substrate such as paper.

### <<Method for producing printed matter>>

A laminate with an ink composition (printed matter) can be produced by discharging the ink composition onto a surface of a substrate in an inkjet method.

An inkjet recording device for discharging the ink composition onto the surface of the substrate can be applied to any of piezoelectric-, thermal-, and electrostatic-inkjet recording devices.

In the case where the ink composition is an active energy ray curable ink composition, the ink composition discharged onto the surface of the substrate is irradiated with an active energy ray. Examples of the active energy ray include an electromagnetic wave such as a far-ultraviolet ray, an ultraviolet ray, a near-ultraviolet ray, a visible ray, an infrared ray, an X-ray, and a γ-ray; an electron ray, a proton ray, and a neutron ray. A light source for radiating the active energy ray is not particularly limited and examples thereof include a high-pressure mercury lamp, a metal halide lamp, a low-pressure mercury lamp, a super high-pressure mercury lamp, an ultraviolet laser, sunlight, and an LED lamp. The LED lamp is more preferably used as the light source from the viewpoint of energy saving and increasing flexibility in the design of equipment for a printing device.

In the case where the ink composition is a solvent-based ink composition, the ink composition discharged onto the surface of the substrate is dried. Drying conditions are appropriately set depending on the boiling point of a solvent included in the ink composition.

### EXAMPLES

Hereinafter, the present invention will be described in more detail with reference to Examples, but the present invention is not limited thereto in any way.

### <Production of dispersion liquid>

Components in Table 1 below were dispersed with a paint shaker. Note that, "Average particle diameter (pm)" in Table 1 refers to a median diameter D50 and was controlled by varying a dispersion time with the paint shaker. The median diameter D50 of a fluorescent complex in an ink composition (dispersion liquid) was measured using "FPAR-1000" (Otsuka Electronics Co., Ltd.).

### <Production of ink composition>

Ink compositions were prepared by dispersing and mixing components in Table 2 below with a paint shaker.

In Table 1, "Fluorescent substance A" is Lumisis E-300 (Central Techno Corporation) (Eu(hfa)₃(TPPO)₂ (tris[1,1,1,5,5,5-hexafluoro-2,4-butanedionato]bis(triphenylphosphine oxide)europium(III) complex)). Note that, the fluorescent substance A is a fluorescent complex including a rare earth metal element.

In Table 1, "Fluorescent substance B" is a complex polymer composed of tris[1,1,1,5,5,5-hexafluoro-2,4-butanedionato]europium(III) and biphenyl-4,4'-diylbis(diphenylphosphine oxide). Note that, the fluorescent substance B is a fluorescent complex including a rare earth metal element. This was produced with reference to known publications such as Japanese Patent Nos. 4407224 and 5904600.

In Table 1, "Fluorescent substance C" is a complex polymer composed of tris[4,4,4,-trifluoro-1-(2-thienyl)-1,3-butanedionato]europium(III) and biphenyl-4,4'-diylbis(diphenylphosphine oxide). Note that, the fluorescent substance C is a fluorescent complex including a rare earth metal element. This was produced with reference to known publications such as Japanese Patent Nos. 4407224 and 5904600.

In Table 1, "Fluorescent substance D" is a complex polymer composed of tris[1,1,1,5,5,5-hexafluoro-2,4-butanedionato]terbium(III) and biphenyl-4,4'-diylbis(diphenylphosphine oxide). Note that, the fluorescent substance D is a fluorescent complex including a rare earth metal element. This was produced with reference to known publications such as Japanese Patent Nos. 4407224 and 5904600.

In Table 1, "Fluorescent substance E" is a fluorescent substance GOF-SS (ZnO:O) (manufactured by Nemoto & Co., Ltd.). Note that, the fluorescent substance E is an inorganic fluorescent substance rather than a fluorescent complex including a rare earth metal element.

In Table 1, "Fluorescent substance F" is rhodamine B which is a red luminescent organic dye.

In Table 2, "Resin" (binder resin) is "PARALOID B60" (manufactured by Dow Inc.) which is an acrylic resin.

In Table 2, "Polymerization initiator" is "Omnirad TPO" (manufactured by IGM Resins B.V.).

In Table 2, "Surfactant" is "BYK-UV3500" (manufactured by BYK-Chemie GmbH.).

### [Evaluation of settleability]

The ink compositions of Examples and Comparative Examples were tested for settleability. Specifically, each of the ink compositions was added to a transparent container, stored at room temperature for 3 days, and then visually evaluated for sedimentation.

### (Evaluation criteria)

Good (indicated by circle symbol (o)): No sedimentation was observed.
Fair (indicated by triangle symbol (Δ)): A small amount of sedimentation was observed and the ink composition returned to a uniform state by shaking the container.
Poor (indicated by cross symbol (x)): Sedimentation was observed and the ink composition did not return to a uniform state by shaking the container.

### [Evaluation of luminescent ability]

The ink compositions of Examples and Comparative Examples were evaluated for a luminescent ability. Specifically, solid printing was performed using an inkjet printer "MATERIAL PRINTER DMP-2831" (manufactured by FUJIFILM Corporation), and a printed portion was irradiated with a UV lamp at an irradiation wavelength of 365 nm and then visually evaluated for a luminescent state.

### (Evaluation criteria)

Very good (indicated by bullseye symbol (⊙)): Visible under indoor lighting.
Good (indicated by circle symbol (o)): Visible in a room with a light turned off.
Fair (indicated by triangle symbol (Δ)): Visible in a dark room.
Poor (indicated by cross symbol (x)): Less visible even in a dark room.

### [Evaluation of dischargeability]

The ink compositions of Examples and Comparative Examples were evaluated for dischargeability. Specifically, each of the ink compositions of Examples and Comparative Examples was used to continuously print in the same manner as in the above evaluation, and 2 hours later, evaluated for the dischargeability based on a state of the resultant printed matter.

### (Evaluation criteria)

Good (indicated by circle symbol (o)): Fine lines were correctly reproduced.
Fair (indicated by triangle symbol (Δ)): Some deflections were observed.
Poor (indicated by cross symbol (x)): Misregistration of impact positions and deflections were observed.

### [Evaluation of light resistance]

The ink compositions of Examples and Comparative Examples were tested for light resistance. Specifically, each of the ink compositions was discharged onto a surface of a substrate in an inkjet method to thereby produce printed matter in which a printed layer is formed on the surface of the substrate. Then, a xenon lamp (Atlas Ci4400 Weather-Ometer, inner filter: quartz, outer filter: soda lime and infrared ray absorbing coating (CIRA)) was used for an irradiation test at an illuminance of 1.2 mW/m² for 50 hours and luminescent states before and after the irradiation test were visually evaluated.

### (Evaluation criteria)

Good (indicated by circle symbol (o)): There was no difference in visibility before and after the test.
Fair (indicated by triangle symbol (Δ)): The luminescence was slightly decreased, but there was no problem in visibility.
Poor (indicated by cross symbol (x)): The luminescence was clearly decreased, and visibility deteriorated.

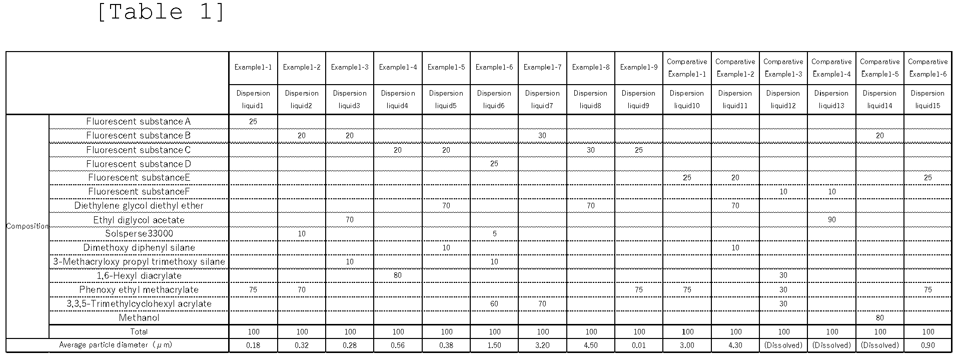

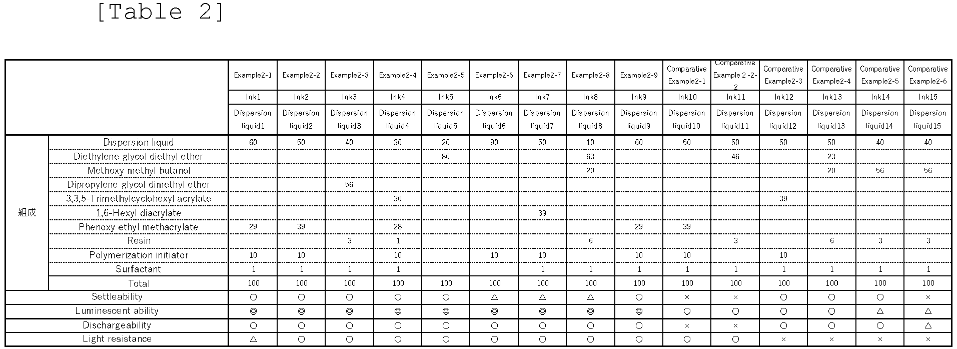

It was demonstrated from Tables 1 and 2 that the ink compositions of Examples in which the fluorescent complexes had been dispersed were able to prevent the fluorescent substances from losing a luminescent ability and the ink compositions having high discharge stability could be produced.

### EXPLANATION OF REFERENCE NUMERALS

1 Printed matter
11 Information pattern (printed layer)
12 Information pattern (printed layer)
13 Substrate
14 Overcoat layer
15 Overcoat layer
a Black light

## Claims

1. A dispersion liquid for use in an ink composition to be discharged in an inkjet method, the dispersion liquid comprising:
a fluorescent complex comprising a rare earth metal element, the fluorescent complex being dispersed in the dispersion liquid.

2. The dispersion liquid according to claim 1, wherein the fluorescent complex has a median diameter D50 of 5 µm or less.

3. The dispersion liquid according to claim 1 or 2, wherein the rare earth metal element comprises at least one selected from the group consisting of Eu³⁺, Eu²⁺, Tb³⁺, Sm³⁺, Yb³⁺, Nd³⁺, Er³⁺, Pr³⁺, Tm³⁺, Dy³⁺, Ce³⁺, Ho³⁺, and Gd³⁺.

4. The dispersion liquid according to any one of claims 1 to 3, comprising an active energy ray polymerizable compound.

5. The dispersing liquid according to any one of claims 1 to 4, comprising an organic solvent.

6. An ink composition for discharge in an inkjet method, the ink composition comprising:
a fluorescent complex comprising a rare earth metal element, the fluorescent complex being dispersed in the ink composition.

7. A printed matter, comprising:
a substrate; and
a printed layer formed with the ink composition according to claim 6 on a surface of the substrate.

8. The printed matter according to claim 7, wherein the substrate is an absorbent substrate; and
wherein at least a portion of the ink composition is absorbed on the absorbent substrate.

9. The printed matter according to claim 7 or 8, wherein the substrate comprises no brightening agent.

10. The printed matter according to claim 7 or 8, wherein the substrate comprises a brightening agent; and
wherein a fluorescent complex that does not emit blue light is dispersed in the ink composition.

11. The printed matter according to any one of claims 7 to 10, wherein an overcoat layer is disposed on a surface of the printed layer; and
wherein the overcoat layer has a total light transmittance of 50% or more as measured according to JIS K 7361-1.

12. The printed matter according to any one of claims 7 to 11, wherein the substrate has a color identical to that of an information pattern of the printed layer.
